(19) **Europäisches Patentamt**
**European Patent Office**
**Office européen des brevets**

(11) **EP 3 316 379 A1**

(12) **EUROPEAN PATENT APPLICATION**
published in accordance with Art. 153(4) EPC

(43) Date of publication:
**02.05.2018 Bulletin 2018/18**

(21) Application number: **16813546.5**

(22) Date of filing: **29.03.2016**

(51) Int Cl.:
**H01M 10/0562** (2010.01)  **H01M 10/058** (2010.01)
**H01M 10/0525** (2010.01)

(86) International application number:
**PCT/CN2016/077692**

(87) International publication number:
**WO 2016/206430 (29.12.2016 Gazette 2016/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.06.2015  CN 201510359289**

(71) Applicant: **BYD Company Limited**
**Shenzhen, Guangdong 518118 (CN)**

(72) Inventors:
• **YI, Guangui**
**Shenzhen**
**Guangdong 518118 (CN)**

• **MA, Yongjun**
**Shenzhen**
**Guangdong 518118 (CN)**
• **GUO, Zizhu**
**Shenzhen**
**Guangdong 518118 (CN)**
• **WANG, Xianghui**
**Shenzhen**
**Guangdong 518118 (CN)**
• **XIE, Jing**
**Shenzhen**
**Guangdong 518118 (CN)**

(74) Representative: **Haseltine Lake LLP**
**Redcliff Quay**
**120 Redcliff Street**
**Bristol BS1 6HU (GB)**

(54) **SOLID ELECTROLYTE AND PREPARATION METHOD THEREFOR, AND LITHIUM-ION BATTERY CONTAINING SAME**

(57)    A solid electrolyte contains an internal component and an external component coated on a surface of the internal component. The internal component is represented by a formula $Li_{1+x}M_xTi_{2-x}(PO_4)_3$, M is one or more elements selected from a group consisting of Al, La, Cr, Ga, Y, and In, and $0.05 \leq x \leq 0.4$. The external component has an ionic conductivity of no less than $10^{-6}$S/cm, an electrochemical window of the solid electrolyte is no less than 5V. A method of preparing the solid electrolyte and a lithium ion battery including the solid electrolyte are also provided.

EP 3 316 379 A1

**Description**

**CROSS-REFERENCE TO RELATED APPLICATION**

This application is based on and claims priority to and benefits of Chinese Patent Application No. 201510359289.0, filed with the State Intellectual Property Office (SIPO) of the People's Republic of China on June 25, 2015. The entire contents of which are hereby incorporated by reference.

**TECHNICAL FIELD**

Embodiments of the disclosure generally relate to lithium ion batteries, and more particularly to a solid electrolyte, a method for preparing the solid electrolyte, and a lithium ion battery including the solid electrolyte.

**BACKGROUND**

Lithium ion batteries have high energy efficiency density, good rechargeable performance and low usage loss, etc., so they are commonly used in consumer electronics and electric vehicles. As a result, lithium ion solid electrolyte is one of the hot spots in the research of lithium ion battery materials.

At present, electrochemical window of the lithium ion solid electrolyte is narrow, and the battery having the solid electrolyte has a possibility of short circuit, a performance of security thereof is low. As a result, an application of the solid electrolyte in the solid lithium ion batteries is greatly limited. Therefore, the performance of the solid electrolyte needs to be further improved.

**SUMMARY**

The present disclosure aims to provide a solid electrolyte, so as to solve the problem that an electrochemical window of the solid electrolyte is low in the related art.

Embodiments of one aspect the present disclosure provide a solid electrolyte. The solid electrolyte includes: an internal component and an external component coated on a surface of the internal component; the internal component is represented by a formula $Li_{1+x}M_xTi_{2-x}(PO_4)_3$, M is one or more elements selected from the group of Al, La, Cr, Ga, Y, and In, and $0.05 \leq x \leq 0.4$; the external component has a ionic conductivity of no less than $10^{-6}$ S/cm, the electrochemical window of the solid electrolyte is no less than 5V.

Embodiments of another aspect the present disclosure provide a method for preparing a solid electrolyte. The method includes: providing an internal component represented by a formula $Li_{1+x}M_xTi_{2-x}(PO_4)_3$, M is one or more elements selected from a group of Al, La, Cr, Ga, Y, and In, and $0.05 \leq x \leq 0.4$; providing a lithium source, a phosphate, a fluorine source and a boron source of an external component, dissolving them in water to form a raw materials solution of the external component; a molar ratio of elements lithium: boron: phosphorus: fluorine in the raw materials solution of the external component is 0.15~0.165: 0.95: (1-y): (3y), and $0.01 \leq y \leq 0.5$; mixing the internal component with the raw materials solution of the external component, and regulating the pH value to be 8~11, then a precursor materials is obtained; performing a first calcination to the precursor materials to obtain the solid electrolyte, wherein the solid electrolyte includes the internal component and the external component coated on a surface of the internal component.

Embodiments of a further aspect the present disclosure provide a lithium ion battery. The lithium ion battery includes: a cathode; an anode; and the solid electrolyte disposed between the cathode and the anode, the solid electrolyte is a solid electrolyte mentioned above.

Inventors of the present disclosure found that from a large number of experiments: though ionic conductivity of $Li_{1.3}Al_{0.3}Ti_{1.7}(PO_4)_3$ (LATP) having a NASICON structure can reach $10^{-4}$ S/cm at room temperature, which is close to a conductivity of a liquid electrolyte which has been commercialized at present. However, because titanium ions whose valence is easy to change is contained, when LATP is contacted with a low potential negative materials, $Ti^{4+}$ will be reduced to $Ti^{3+}$, and electronic conductance is generated, resulting in a narrow electrochemical window. In the related art, the skilled person carry out ion doping to the LATP, although the ionic conductivity at room temperature can be raised to a certain extent, it fails to solve the problem that this kind of materials will be reduced at low potential. If the materials mentioned above are used as the solid electrolyte of the lithium ion battery, it's hard to avoid battery short circuit caused by the generation of electronic conductance.

According to the solid electrolyte of the present disclosure, a compact layer of external component (e.g. $Li_{0.15}B_{0.95}(PO_4)_{1-y}F_{3y}$) is provided on the surface of the internal component $Li_{1+x}M_xTi_{2-x}(PO_4)_3$. The external component can form full surface contact with the internal component, and has a wide electrochemical window (e.g. more than 5V). An electronic conductivity of the external component is low, so a complete and compact electron shielding layer is formed on the surface of the internal component, and external electrons are shielded by the external component and can't contact with the internal component, such that a redox reaction of the internal component is effectively avoided. Meanwhile, the external component has a high ionic conductivity, it would not affect the conduction of lithium ion. So the solid electrolyte mentioned above has a wide electrochemical window (e.g. more than 5V).

Additional aspects and advantages of the embodiments of the present disclosure will be given in part in the following descriptions, become apparent in part from the following descriptions, or be learned from the practice of the embodiments of the present disclosure.

## DETAILED DESCRIPTION

Reference will be made in detail to embodiments of the present disclosure. The embodiments described herein are explanatory and illustrative, which are used to generally understand the present disclosure. The embodiments shall not be construed to limit the present disclosure.

For the purpose of the present description and of the following claims, the definitions of the numerical ranges always include the extremes unless otherwise specified.

In addition, terms such as "first" and "second" are used herein for purposes of description and are not intended to indicate or imply relative importance or significance.

A solid electrolyte according to embodiments of the present disclosure includes an internal component and an external component coated on a surface of the internal component. The internal component has a chemical formula $Li_{1+x}M_xTi_{2-x}(PO_4)_3$, M is one or more selected from Al, La, Cr, Ga, Y, and In, and $0.05 \leq x \leq 0.4$; the external component has an ionic conductivity of more than $10^{-6}$ S/cm, and an electrochemical window of the solid electrolyte is more than 5V.

In some embodiments, the internal component adopts materials of $Li_{1+x}M_xTi_{2-x}(PO_4)_3$ having a NASICON structure, M is one or more selected from Al, La, Cr, Ga, Y, and In, and $0.05 \leq x \leq 0.4$. Optionally, the internal component can be one or more selected from $Li_{1.1}Y_{0.1}Ti_{1.9}(PO_4)_3$, $Li_{1.3}Y_{0.3}Ti_{1.7}(PO_4)_3$, $Li_{1.4}Y_{0.4}Ti_{1.6}(PO_4)_3$, $Li_{1.1}Al_{0.1}Ti_{1.9}(PO_4)_3$, $Li_{1.3}Al_{0.3}Ti_{1.7}(PO_4)_3$, $Li_{1.05}La_{0.05}Ti_{1.95}(PO_4)_3$, $Li_{1.1}Cr_{0.1}Ti_{1.9}(PO_4)_3$, $Li_{1.1}Ga_{0.1}Ti_{1.9}(PO_4)_3$ and $Li_{1.1}In_{0.1}Ti_{1.9}(PO_4)_3$. The internal component mentioned above has a high conductivity, stable chemical properties, and would not react with air or water.

An average particle size of the internal component mentioned above can be changeable in a large range, in some embodiments, optionally, the average particle size of the internal component is in a range of about 0.5 μm to about 10 μm.

In some embodiments, the external component is coated on a surface of the internal component, and an electron conductivity of the external component is lower than $10^{-10}$ S/cm, so it can be ensured that a complete and compact electronic shielding layer can be formed on the surface of the internal component, the external electrons can be shielded by the external component and fail to be contact with the internal component, so a redox reaction of the internal component is effectively avoided, an electrochemical window of the solid electrolyte can be high, and it can reach more than 5V for example.

As known to the skilled person, the electrochemical window is a section of an electrochemical cyclic voltammetric curve that has no electrochemical reaction, that is, only in a charge state within this potential range, and there is no electrochemical reaction occurring. The electrochemical window can be measured through ordinary electrochemical workstation.

Meanwhile, in order to guarantee the ionic conductivity of the solid electrolyte, in some embodiments, an ionic conductivity of the external component is more than $10^{-6}$ S/cm, for example within a range of $10^{-6}$ S/cm to $10^{-5}$ S/cm.

According to some embodiments of the present disclosure, in order to improve an ability of the external component to reduce an intergranular resistance of the internal component, optionally, the external component is represented by a chemical formula $Li_{0.15}B_{0.95}(PO_4)_{1-y}F_{3y}$, and $0.01 \leq y \leq 0.5$.

Specifically, the external component can be one or more selected from $Li_{0.15}B_{0.95}(PO_4)_{0.99}F_{0.03}$, $Li_{0.15}B_{0.95}(PO_4)_{0.95}F_{0.15}$, $Li_{0.15}B_{0.95}(PO_4)_{0.9}F_{0.3}$, $Li_{0.15}B_{0.95}(PO_4)_{0.8}F_{0.6}$, $Li_{0.15}B_{0.95}(PO_4)_{0.7}F_{0.9}$ and $Li_{0.15}B_{0.95}(PO_4)_{0.5}F_{1.5}$. The external component mentioned above is soft, so that it can be plastic deformable. It also has a low electron conductivity, so that it can form full surface contact with the internal component. Therefore, a complete and compact electron shielding layer can be formed on the surface of the internal component, external electrons will be shielded by the external component and can't contact with the internal component, and a redox reaction of the internal component is effectively avoided.

In some embodiments, a thickness of the external component coated on the surface of the internal component can be 10 nm to 30 nm.

According to some embodiments of the present disclosure, in order to achieve a good coating effect and avoid causing excessive impact on the electrical conductivity of solid electrolyte at the same time, optionally, based on the total weight of the solid electrolyte, a content of the external component is about 0.5 wt% to about 10 wt%.

The present disclosure also provides a method for preparing the solid electrolyte mentioned above, including:

providing an internal component represented by a formula $Li_{1+x}M_xTi_{2-x}(PO_4)_3$, M is one or more elements selected from a group consisting of Al, La, Cr, Ga, Y, and In, and $0.05 \le x \le 0.4$;

providing a lithium source, a phosphate, a fluorine source and a boron source of the external component, dissolving them in water to form a raw materials solution of the external component; a molar ratio of elements lithium: boron: phosphorus: fluorine in the raw materials solution of the external component is 0.15~0.165: 0.95: (1-y): (3y), and $0.01 \le y \le 0.5$;

mixing the internal component with the raw materials solution of the external component, and regulating the pH value to be 8~11, then a precursor materials is obtained after drying;

performing a first calcination to the precursor materials to obtain the solid electrolyte, wherein the solid electrolyte comprising the internal component and the external component coated on the surface of the internal component.

The method for preparing the internal component $Li_{1+x}M_xTi_{2-x}(PO_4)_3$ is well known, for example, mixing a titanium source, a metal M source, a lithium source and a phosphate of the internal component and performing a second calcination, and the internal component is obtained.

Specifically, the titanium source mentioned above can be titanium containing compounds, for example $TiO_2$.

In the chemical formula mentioned above, M can be one or more elements selected from the group consisting of Al, La, Cr, Ga, Y, and In. Specifically, the metal M source can be selected from the corresponding compounds of all kinds of metals mentioned above, for example, the metal M source is one or more selected from $Al_2O_3$, $Y_2O_3$, $Ga_2O_3$, $La_2O_3$, $Cr_2O_3$ and $In_2O_3$.

The lithium source of the internal component can be a variety of lithium compounds commonly used in this field, for example, the lithium source of the internal component can be one or more selected from lithium carbonate, lithium hydroxide, lithium hydroxide monohydrate, lithium nitrate and lithium acetate.

The phosphate of the internal component is one or more selected from $NH_4H_2PO_4$, $(NH_4)_2HPO_4$, $(NH_4)_3PO_4$ and $H_3PO_4$.

In order to prepare the internal component having a chemical formula of $Li_{1+x}M_xTi_{2-x}(PO_4)_3$, based on a molar content of elements lithium, metal M, titanium and phosphorus, a content ratio of the lithium source, the metal M source, the titanium source and the phosphate of the internal component is (1-1.2) (1+x): x: (2-x): 3.

In some embodiments, the lithium source of the internal component can be added by a moderate excess, so loss of lithium ions in a high temperature heating can be compensated, and there is no other by-products produced at the same time.

The method for mixing the aforementioned lithium source of the internal component, metal M source, titanium source and phosphate of the internal component can include a conventional ball milling process, and a second calcination to the mixture obtained during the ball milling process. Then the internal component of chemical formula $Li_{1+x}M_xTi_{2-x}(PO_4)_3$ is obtained, where, M is one or more elements selected from the group consisting of Al, La, Cr, Ga, Y, and In, and $0.05 \le x \le 0.4$.

In some embodiments, the second calcination mentioned above is performed at a temperature of about 750°C to about 950°C for about 4 hours to about 16 hours.

The internal component can be prepared through the aforementioned method, according to different species and content of the raw materials, different internal components can be prepared accordingly, for example, $Li_{1.1}Y_{0.1}Ti_{1.9}(PO_4)_3$, $Li_{1.3}Y_{0.3}Ti_{1.7}(PO_4)_3$, $Li_{1.4}Y_{0.4}Ti_{1.6}(PO_4)_3$, $Li_{1.1}Al_{0.1}Ti_{1.9}(PO_4)_3$, $Li_{1.3}Al_{0.3}Ti_{1.7}(PO_4)_3$, $Li_{1.05}La_{0.05}Ti_{1.95}(PO_4)_3$, $Li_{1.1}Cr_{0.1}Ti_{1.9}(PO_4)_3$, $Li_{1.1}Ga_{0.1}Ti_{1.9}(PO_4)_3$ or $Li_{1.1}In_{0.1}Ti_{1.9}(PO_4)_3$.

Optionally, through control of the ball milling process and the second calcination process, an average particle size of the internal component is 0.5 $\mu$m to 10 $\mu$m.

In some embodiments, the method for preparing the external component is as following, according to the composition of the external component required, dissolving a lithium source of the external component, a phosphate of the external component, a fluorine source and a boron source in water to form a raw materials solution of the external component, and calculating based on molar content of the elements, a ratio of elements lithium: boron: phosphorus: fluorine to be 0.15~0.165: 0.95: (1-y): (3y), with $0.01 \le y \le 0.5$.

In order to avoid a loss of lithium ion in the subsequent heat treatment process, optionally, in the step of preparing the raw materials solution of the external component, the content of lithium source of the external component can be added to 1.1 times as much as the required content.

Optionally, the fluorine source is one or more selected from LiF, $NH_4F$ and NaF; the boron source is one or more selected from $H_3BO_3$, $B_2O_3$, $LiBO_2$ and triethyl borate; the lithium source of the external component is one or more selected from lithium carbonate, lithium hydroxide, lithium hydroxide monohydrate, lithium nitrate and lithium acetate; and the phosphate of the external component is one or more selected from $NH_4H_2PO_4$, $(NH_4)_2HPO_4$, $(NH_4)_3PO_4$ and $H_3PO_4$.

After the raw materials solution of the external component is obtained through the aforementioned method, the internal component is mixed with the raw materials solution of the external component, and the pH value is regulated to be 8~11, the raw materials solution of the external component is coated on the surface of the internal component in a gelatinous form, and a precursor materials is obtained after drying.

When mixing the raw materials solution of the external component and the internal component, a relative content between them can be changed in a large range, optionally, a content of the external component is about 0.5 wt% to about 10 wt%, based on the total weight of the solid electrolyte. Optionally, a thickness of the external component is 10 nm to 30 nm.

Then by performing a first calcination to the precursor materials obtained by the method mentioned above, the solid electrolyte is obtained after cooling. The solid electrolyte includes the internal component and the external component coated on a surface of the internal component.

Optionally, the first calcination step includes: increasing the temperature of the precursor materials to about 900 °C to about 1200 °C with a heating rate of about 2 °C/min to about 10°C/min, and keeping the precursor materials at about 900 °C to about 1200 °C for about 8 hours to about 24 hours.

Through the first calcination, the gelatum coated on the surface of the internal component in the raw materials solution transformed into the solid external component having a chemical formula $Li_{0.15}B_{0.95}(PO_4)_{1-y}F_{3y}$, and $0.01 \leq y \leq 0.5$.

According to different species and content of the lithium source of the external component, the phosphate of the external component, the fluoride source and the boron source, the specific chemical formula of the external component prepared can be different. Specifically, the external component is selected one or more from $Li_{0.15}B_{0.95}(PO_4)_{0.99}F_{0.03}$, $Li_{0.15}B_{0.95}(PO_4)_{0.95}F_{0.15}$, $Li_{0.15}B_{0.95}(PO_4)_{0.9}F_{0.3}$, $Li_{0.15}B_{0.95}(PO_4)_{0.8}F_{0.6}$, $Li_{0.15}B_{0.95}(PO_4)_{0.7}F_{0.9}$ or $Li_{0.15}B_{0.95}(PO_4)_{0.5}F_{1.5}$.

According to different specific application, before performing the first calcination to the precursor materials, a press forming process can be performed to the precursor materials to form a specific required shape. For example, the shape can be a thin plate or column shape with any thickness, depending on the specific design requirement of the solid electrolyte. Then the first calcination is performed after the press forming process.

The present disclosure further provides a lithium ion battery, which includes a cathode, an anode, and a solid electrolyte disposed between the cathode and the anode. The solid electrolyte is the solid electrolyte mentioned above.

In some embodiments of the present disclosure, the cathode and anode can adopt commonly used materials and structures, for example, the materials of cathode can be one or more of lithium cobaltate, lithium manganite, lithium iron phosphate and Ni-Co-Mn ternary materials, and the anode materials can be one or more selected from a lithium metal, graphite, mesocarbon microbeads, mesophase carbon fiber, soft carbon, hard carbon and lithium titanate.

The lithium ion battery mentioned above can be prepared through conventional methods, for example, assembling the solid electrolyte, the cathode and the anode together into all solid state lithium ion battery.

Hereinafter, the present disclosure will be described in details with reference to the following embodiments.

EMBODIMENT 1

The present embodiment provides a method for preparing a solid electrolyte, a solid electrolyte prepared thereof. The method includes the following steps.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.1}Al_{0.1}Ti_{1.9}(PO_4)_3$.

2. The powder mixture of step 1 was placed on an alumina crucible and calcined at 800°C for 6 h in a muffle furnace, and then cooled to obtain the internal component of chemical formula $Li_{1.1}Al_{0.1}Ti_{1.9}(PO_4)_3$, and an average particle size thereof is 5 $\mu$m.

3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of the external component $Li_{0.15}B_{0.95}(PO_4)_{0.9}F_{0.3}$ and the external component was 2 wt% of the total weight of the solid electrolyte. The internal component powers of $Li_{1.1}Al_{0.1}Ti_{1.9}(PO_4)_3$ with corresponding mas were added into the deionized water by stirring strongly to make them mixed evenly, and the pH of the system was adjusted to be 11. Then a uniform gel was generated and coated on the surface of the powers of the internal component $Li_{1.1}Al_{0.1}Ti_{1.9}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 1000 °C with a heating rate of 2 °C/min, and the sheets were kept at 1000 °C for 24 h. The heated sheet was cooled to obtain a solid electrolyte thin sheet A1 for lithium ion batteries, in which a thickness of the external component is 30 nm.

EMBODIMENT 2

The present embodiment provides a method for preparing a solid electrolyte, a solid electrolyte prepared thereof.

1. Powders of $Li_2CO_3$, $Y_2O_3$, $TiO_2$ and $NH_4H_2PO_4$ were mixed together and ball milled to form a powder mixture, in which amounts of these powders were based on the stoichiometric ratio of the internal component $Li_{1.1}Y_{0.1}Ti_{1.9}(PO_4)_3$. The internal component prepared has an average particle size of 5 $\mu$m.

2. A solid electrolyte thin sheet A2 for lithium ion batteries was obtained according to the same methods of step 3 to step 4 in EMBODIMENT 1, in which a thickness of the external component is 25 nm.

EMBODIMENT 3

The present embodiment provides a method for preparing a solid electrolyte, a solid electrolyte prepared thereof.

1. Powders of $Li_2CO_3$, $Ca_2O_3$, $TiO_2$ and $NH_4H_2PO_4$ were mixed together and ball milled to form a powder mixture, in which amounts of these powders were based on the stoichiometric ratio of the internal component $Li_{1.1}Ga_{0.1}Ti_{1.9}(PO_4)_3$. The internal component prepared has an average particle size of 2 $\mu$m.

2. A solid electrolyte thin sheet A3 for lithium ion batteries was obtained according to the same methods of step 3 to step 4 in EMBODIMENT 1, in which a thickness of the external component is 10 nm.

EMBODIMENT 4

The present embodiment provides a method for preparing a solid electrolyte, a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.3}Al_{0.3}Ti_{1.7}(PO_4)_3$.

2. The powder mixture of step 1 was placed on an alumina crucible and calcined at 850°C for 12 h in a muffle furnace, and then cooled to obtain the internal component of chemical formula $Li_{1.3}Al_{0.3}Ti_{1.7}(PO_4)_3$, an average particle size thereof is 2 $\mu$m.

3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of the external component $Li_{0.15}B_{0.95}(PO_4)_{0.9}F_{0.3}$ and the external component was 5 wt% of the total weight of the solid electrolyte. The internal component powers of $Li_{1.3}Al_{0.3}Ti_{1.7}(PO_4)_3$ with corresponding mas were added into the deionized water by stirring strongly to make them mixed evenly, and then the pH of the system was adjusted to be 10. Then a uniform gel was generated and coated on the surface of the powers of internal component $Li_{1.3}Al_{0.3}Ti_{1.7}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 1100°C with a heating rate of 2 °C/min, and the sheets were kept at 1100 °C for 20 h. The heated sheet was cooled to obtain a solid electrolyte thin sheet A4 for lithium ion batteries, in which a thickness of the external component is 20 nm.

EMBODIMENT 5

The present embodiment provides a method for preparing a solid electrolyte, a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.3}Al_{0.3}Ti_{1.7}(PO_4)_3$.

2. The powder mixture of step 1 was placed on an alumina crucible and calcined at 850°C for 12 h in a muffle furnace, and then cooled to obtain the internal component of chemical formula $Li_{1.3}Al_{0.3}Ti_{1.7}(PO_4)_3$, and an average particle size thereof is 6 $\mu$m.

3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of the external component $Li_{0.15}B_{0.95}(PO_4)_{0.9}F_{0.3}$ and the external component was 10 wt% of the total weight of the solid electrolyte. The internal component powers of $Li_{1.3}Al_{0.3}Ti_{1.7}(PO_4)_3$ with corresponding mas were added into the deionized water by stirring strongly to make them mixed evenly, and then the pH of the system was adjusted to be 10. Then a uniform gel was generated and coated on the surface of the powers of internal component $Li_{1.3}Al_{0.3}Ti_{1.7}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 1100°C with a heating rate of 2 °C/min, and the sheets were kept at 1100 °C for 20 h. The heated sheet was cooled to obtain a solid electrolyte thin sheet A5 for lithium ion batteries, in which a thickness of the external component is 25 nm.

EMBODIMENT 6

The present embodiment provides a method for preparing a solid electrolyte, a solid electrolyte prepared thereof.

1. Powders of $Li_2CO_3$, $Y_2O_3$, $TiO_2$ and $NH_4H_2PO_4$ were mixed together and ball milled to form a powder mixture, in which amounts of these powders were based on the stoichiometric ratio of the internal component $Li_{1.3}Y_{0.3}Ti_{1.7}(PO_4)_3$. The internal component prepared has an average particle size of 8 $\mu m$.
2. A solid electrolyte thin sheet A6 for lithium ion batteries was obtained according to the same methods of step 3 to step 4 in EMBODIMENT 4, in which a thickness of the external component is 15 nm.

EMBODIMENT 7

The present embodiment provides a method for preparing a solid electrolyte, a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.3}Al_{0.3}Ti_{1.7}(PO_4)_3$.
2. The powder mixture of step 1 was placed on an alumina crucible and calcined at 850 °C for 12 h in a muffle furnace, and then cooled to obtain the internal component of chemical formula $Li_{1.3}Al_{0.3}Ti_{1.7}(PO_4)_3$, and an average particle size thereof is 10 $\mu m$.
3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.99}F_{0.03}$ and the external component was 5 wt% of the total weight of the solid electrolyte. The internal component powers of $Li_{1.3}Al_{0.3}Ti_{1.7}(PO_4)_3$ with corresponding mas were added into the deionized water by stirring strongly to make them mixed evenly, and then the pH of the system was adjusted to be 11. Then a uniform gel was generated and coated on the surface of the powers of internal component $Li_{1.3}Al_{0.3}Ti_{1.7}(PO_4)_3$, and the precursor materials with core-shell structure was obtained after drying.
4. The precursor materials with core-shell structure was molded into sheets by pressing. The sheets were placed on an alumina crucible and the crucible was placed in a muffle furnace. Then the muffle furnace is operated, such that the temperature of the sheets was increased to 1100 °C with a heating rate of 2 °C/min, and the sheets were kept at 1100 °C for 20h. The heated sheet was cooled to obtain a solid electrolyte thin sheet A7 for lithium ion batteries, in which a thickness of the external component is 12 nm.

EMBODIMENT 8

The present embodiment provides a method for preparing a solid electrolyte, a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.3}Al_{0.3}Ti_{1.7}(PO_4)_3$.
2. The powder mixture of step 1 was placed on an alumina crucible and calcined at 950 °C for 10 h in a muffle furnace, and then cooled to obtain the internal component of chemical formula $Li_{1.3}Al_{0.3}Ti_{1.7}(PO_4)_3$, and an average particle size thereof is 0.5 $\mu m$.
3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.95}F_{0.15}$ and the external component was 0.5 wt% of the total weight of the solid electrolyte. The internal component powers of $Li_{1.3}Al_{0.3}Ti_{1.7}(PO_4)_3$ with corresponding mas were added into the deionized water by stirring strongly to make them mixed evenly, and the pH of the system was adjusted to be 8. Then a uniform gel was generated and coated on the surface of the powers of internal component $Li_{1.3}Al_{0.3}Ti_{1.7}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 1050 °C with a heating rate of 2 °C/min, and the sheets were kept at 1050 °C for 12 h. The heated sheet was cooled to obtain a solid electrolyte thin sheet A8 for lithium ion batteries, in which a thickness of the external component is 20 nm.

EMBODIMENT 9

The present embodiment provides a method for preparing a solid electrolyte, a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.4}Al_{0.4}Ti_{1.6}(PO_4)_3$.
2. The powder mixture of step 1 was placed on an alumina crucible and calcined at 900°C for 8 h in a muffle furnace, and then cooled to obtain the internal component of chemical formula $Li_{1.4}Al_{0.4}Ti_{1.6}(PO_4)_3$, an average particle size thereof is 0.8 $\mu$m.
3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.8}F_{0.6}$ and the external component was 8 wt% of the total weight of the solid electrolyte. The internal component powers of $Li_{1.4}Al_{0.4}Ti_{1.6}(PO_4)_3$ with corresponding mas were added into the deionized water by stirring strongly to make them mixed evenly, and the pH of the system was adjusted to be 9. Then a uniform gel was generated and coated on the surface of the powers of internal component $Li_{1.4}Al_{0.4}Ti_{1.6}(PO_4)_3$, and the precursor materials with core-shell structure was obtained after drying.
4. The precursor materials with core-shell structure was molded into sheets by pressing. The sheets were placed on an alumina crucible and the crucible was placed in a muffle furnace. Then the muffle furnace is operated, such that the temperature of the sheets was increased to 1150 °C with a heating rate of 2 °C/min, and the sheets were kept at 1150 °C for 8 h. The heated sheet was cooled to obtain a solid electrolyte thin sheet A9 for lithium ion batteries, in which a thickness of the external component is 23 nm.

EMBODIMENT 10

The present embodiment provides a method for preparing a solid electrolyte, a solid electrolyte prepared thereof and a lithium ion battery including the solid electrolyte.

1. Powders of $Li_2CO_3$, $La_2O_3$, $TiO_2$ and $NH_4H_2PO_4$ were mixed together and ball milled to form a powder mixture, in which amounts of these powders were based on the stoichiometric ratio of the internal component $Li_{1.05}La_{0.05}Ti_{1.95}(PO_4)_3$.
2. The powder mixture of step 1 was placed on an alumina crucible and calcined at 750 °C for 16 h in a muffle furnace, then cooled to obtain the internal component of chemical formula $Li_{1.05}La_{0.05}Ti_{1.95}(PO_4)_3$, and an average particle size thereof is 1 $\mu$m.
3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.7}F_{0.9}$ and the external component was 5 wt% of the total weight of the solid electrolyte. The internal component powers of $Li_{0.15}La_{0.05}Ti_{1.95}(PO_4)_3$ with corresponding mas were added into the deionized water by stirring strongly to make them mixed evenly, and the pH of the system was adjusted to be 10. Then a uniform gel was generated and coated on the surface of the powers of internal component $Li_{1.05}La_{0.05}Ti_{1.95}(PO_4)_3$, and the precursor materials with core-shell structure was obtained after drying.
4. The precursor materials with nuclear shell structure was molded into sheets by pressing. The sheets were placed on an alumina crucible and the crucible was placed in a muffle furnace. Then the muffle furnace is operated, such that the temperature of the sheets was increased to 1200 °C with a heating rate of 2 °C/min, and the sheets were kept at 1200 °C for 8 h. The heated sheet was cooled to obtain a solid electrolyte thin sheet A10 for lithium ion batteries, in which a thickness of the external component is 30 nm.

EMBODIMENT 11

The present embodiment provides a method for preparing a solid electrolyte, a solid electrolyte prepared thereof.

1. Powders of $Li_2CO_3$, $Cr_2O_3$, $TiO_2$ and $NH_4H_2PO_4$ were mixed together and ball milled to form a powder mixture, in which amounts of these powders were based on the stoichiometric ratio of the internal component $Li_{1.1}Cr_{0.1}Ti_{1.9}(PO_4)_3$.

2. The powder mixture of step 1 was placed on an alumina crucible and calcined at 950 °C for 4 h in a muffle furnace, then cooled to obtain the internal component of chemical formula $Li_{1.1}Cr_{0.1}Ti_{1.9}(PO_4)_3$, and an average particle size thereof is 1.5 $\mu$m.

3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.5}F_{1.5}$ and the external component was 6 wt% of the total weight of the solid electrolyte. The internal component powers of $Li_{1.1}Cr_{0.1}Ti_{1.9}(PO_4)_3$ with corresponding mas were added into the deionized water by stirring strongly to make them mixed evenly, and the pH of the system was adjusted to be 11. Then a uniform gel was generated and coated on the surface of the powers of internal component $Li_{1.1}Cr_{0.1}Ti_{1.9}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 900 °C with a heating rate of 2 °C/min, and the sheets were kept at 900 °C for 24 h. The heated sheet was cooled to obtain a solid electrolyte thin sheet A11 for lithium ion batteries, in which a thickness of the external component is 20 nm.

EMBODIMENT 12

The present embodiment provides a method for preparing a solid electrolyte, a solid electrolyte prepared thereof.

1. Powders of $Li_2CO_3$, $In_2O_3$, $TiO_2$ and $NH_4H_2PO_4$ were mixed together and ball milled to form a powder mixture, in which amounts of these powders were based on the stoichiometric ratio of the internal component $Li_{1.1}In_{0.1}Ti_{1.9}(PO_4)_3$.

2. The powder mixture of step 1 was placed on an alumina crucible and calcined at 900 °C for 8 h in a muffle furnace, and then cooled to obtain the internal component of chemical formula $Li_{1.1}In_{0.1}Ti_{1.9}(PO_4)_3$, an average particle size thereof is 3 $\mu$m.

3. Powders of LiOH, $H_3BO_3$, $NH_4H_2PO_4$ and LiF were added into deionized water, in which amounts of these powders of LiOH, $H_3BO_3$, $NH_4H_2PO_4$ and LiF were based on the stoichiometric ratio of $Li_{0.15}B_{0.95}(PO_4)_{0.8}F_{0.6}$ and the external component was 8 wt% of the total weight of the solid electrolyte. The internal component powers of $Li_{1.1}In_{0.1}Ti_{1.9}(PO_4)_3$ with corresponding mas were added into the deionized water by stirring strongly to make them mixed evenly, and the pH of the system was adjusted to be 8. Then a uniform gel was generated and coated on the surface of the powers of internal component $Li_{1.1}In_{0.1}Ti_{1.9}(PO_4)_3$, and the precursor materials with core-shell structure was obtained after drying.

4. The precursor materials with core-shell structure was molded into sheets by pressing. The sheets were placed on an alumina crucible and the crucible was placed in a muffle furnace. Then the muffle furnace is operated, such that the temperature of the sheets was increased to 1150 °C with a heating rate of 2 °C/min, and the sheets were kept at 1150 °C for 8 h. The heated sheet was cooled to obtain a solid electrolyte thin sheet A12 for lithium ion batteries, in which a thickness of the external component is 25 nm.

COMPARATIVE EMBODIMENT 1

The present comparative embodiment provides a method for preparing a solid electrolyte and a solid electrolyte prepared thereof.

1. Powders of $Li_2CO_3$, $Al_2O_3$, $TiO_2$ and $NH_4H_2PO_4$ were mixed together and ball milled to form a powder mixture, in which amounts of these powders were based on the stoichiometric ratio of the internal component $Li_{1.3}Al_{0.3}Ti_{1.7}(PO_4)_3$.

2. The powder mixture of step 1 was placed on an alumina crucible and calcined at 850 °C for 12 h in a muffle furnace, and then cooled to obtain the internal component powders of chemical formula $Li_{1.3}Al_{0.3}Ti_{1.7}(PO_4)_3$.

3. The powers of $Li_{1.3}Al_{0.3}Ti_{1.7}(PO_4)_3$ was molded into sheets by pressing. The sheets were placed on an alumina crucible and the crucible was placed in a muffle furnace. Then the muffle furnace is operated, such that the temperature of the sheets was increased to 1100 °C with a heating rate of 2 °C/min, and the sheets were kept at 1100 °C for 20 h. The heated sheet was cooled to obtain a solid electrolyte thin sheet CA1 $Li_{1.3}Al_{0.3}Ti_{1.7}(PO_4)_3$ for lithium ion batteries.

COMPARATIVE EMBODIMENT 2

The present comparative embodiment provides a method for preparing a solid electrolyte and a solid electrolyte prepared thereof.

A solid electrolyte CA2 having a formula $Li_{3.76}Al_{0.36}Zn_{0.07}Ti_{1.32}Si_{0.25}P_{2.39}O_{11.3}S_{0.7}$ was prepared according to Example 1 of Chinese patent publication No. CN101894972A.

Tests

Ionic conductivity

Ionic conductivity of each of solid electrolytes A1 to A12, CA1 and CA2 was tested with following steps. Two gold films as conductive electrodes (blocking electrode) were formed on two surfaces of the solid electrolyte by sputtering to obtain a test sample, then alternative current impedance of the test sample was carried out in an electrochemical workstation, in which the test of alternative current impedance covered a frequency from $10^5$Hz to 1Hz. Then the total impedance R (including body resistance and grain boundary resistance) of the solid electrolyte was calculated. The ionic conductivity $\sigma$ was calculated by the following formula:

$$\sigma = L/A \cdot R,$$

where L is the thickness of the solid electrolyte, A is the surface area of the gold film, and R is the total impedance of the solid electrolyte. In embodiments of the present disclosure, L=0.2cm, A=1.76cm$^2$.

The results are shown in Table 1.

Electrochemical Window

Electrochemical window of each of solid electrolytes A1 to A12, CA1 and CA2 was tested with following steps. Two surfaces of the solid electrolyte was formed with a Li sheet and a Pt sheet respectively by pressing to form a half-cell, and the cyclic voltammetry curve of the half-cell was measured in an electrochemical workstation.

The results are shown in Table 1.

Table 1

| | Ionic Conductivity (S·cm$^{-1}$) | Electrochemical Window (V) |
|---|---|---|
| A1 | $1.32 \times 10^{-4}$ | >5V |
| A2 | $8.67 \times 10^{-5}$ | >5V |
| A3 | $7.52 \times 10^{-5}$ | >5V |
| A4 | $1.82 \times 10^{-4}$ | >5V |
| A5 | $1.08 \times 10^{-4}$ | >5V |
| A6 | $7.36 \times 10^{-5}$ | >5V |
| A7 | $1.12 \times 10^{-4}$ | >5V |
| A8 | $1.06 \times 10^{-4}$ | >5V |
| A9 | $8.15 \times 10^{-5}$ | >5V |
| A10 | $6.55 \times 10^{-5}$ | >5V |
| A11 | $3.82 \times 10^{-5}$ | >5V |
| A12 | $4.25 \times 10^{-5}$ | >5V |
| CA1 | $1.65 \times 10^{-4}$ | 2.5V |
| CA2 | $2.0 \times 10^{-4}$ | 2.5V |

As can be seen in Table 1, the total ionic conductivity at room temperature of the solid electrolyte

$Li_{1.3}Al_{0.3}Ti_{1.7}(PO_4)_3$ prepared by COMPARATIVE EMBODIMENT 1 is $1.65\times10^{-4}S\cdot cm^{-1}$, and the corresponding electrochemical window is 2.5V. The ionic conductivity at room temperature of the solid electrolyte $Li_{1.3}Al_{0.3}Ti_{1.7}(PO_4)_3$ A4 with core-shell structure (in which the external component is $Li_{0.15}B_{0.95}(PO_4)_{0.9}F_{0.3}$, and the external component was 5 wt% of the total weight of the solid electrolyte) prepared by the EMBODIMENT 4 is $1.82\times10^{-4}S\cdot cm^{-1}$, and the corresponding electrochemical window is more than 5V. The total ionic conductivity at room temperature of the solid electrolyte $Li_{1.3}Al_{0.3}Ti_{1.7}(PO_4)_3$ A5 (in which the external component is $Li_{0.15}B_{0.95}(PO_4)_{0.9}F_{0.3}$, and the external component was 10 wt% of the total weight of the solid electrolyte) prepared by the EMBODIMENT 5 is $1.08\times10^{-4}S\cdot cm^{-1}$ S/cm, and the corresponding electrochemical window is more than 5V. The total ionic conductivity at room temperature of the solid electrolyte $Li_{1.3}Y_{0.3}Ti_{1.7}(PO_4)_3$ A6 (in which the external component is $Li_{0.15}B_{0.95}(PO_4)_{0.9}F_{0.3}$, and the external component was 5 wt% of the total weight of the solid electrolyte) prepared by the EMBODIMENT 6 is about $7.36\times10^{-5}S\cdot cm^{-1}$, and the corresponding electrochemical window is more than 5V. It can be concluded that, with an external component $Li_{0.15}B_{0.95}(PO_4)_{1-y}F_{3y}$ coated on the surface of the internal component having a formula $Li_{1+x}M_xTi_{2-x}(PO_4)_3$, the external electrons can be shielded by the external component and cannot contact with the internal component, a redox reaction of the internal component is effectively avoided, and the electrochemical window of the solid electrolyte is improved. Meanwhile, $Li_{0.15}B_{0.95}(PO_4)_{1-y}F_{3y}$ also has a high ionic conductivity, and the conduction of lithium ion in the external component can be ensured. Therefore, the solid electrolyte of present disclosure has a wide electrochemical window (more than 5V) and a high ionic conductivity, and thus can be widely used.

Although explanatory embodiments have been shown and described, it would be appreciated by those skilled in the art that changes, alternatives, and modifications all falling into the scope of the claims and their equivalents may be made in the embodiments without departing from spirit and principles of the disclosure.

**Claims**

1. A solid electrolyte, comprising:

   an internal component represented by a formula $Li_{1+x}M_xTi_{2-x}(PO_4)_3$, M being one or more elements selected from the group consisting of Al, La, Cr, Ga, Y, and In, and $0.05\leq x\leq0.4$; and
   an external component coated on a surface of the internal component,
   wherein the external component has an ionic conductivity of no less than $10^{-6}$ S/cm, and an electrochemical window of the solid electrolyte is no less than 5V.

2. The solid electrolyte of claim 1, wherein the ionic conductivity of the external component is $10^{-6}$ S/cm to $10^{-5}$ S/cm.

3. The solid electrolyte of claims 1 or 2, wherein the external component is represented by a formula $Li_{0.15}B_{0.95}(PO_4)_{1-y}F_{3y}$, and $0.01\leq y\leq0.5$.

4. The solid electrolyte of anyone of claims 1 to 3, wherein the external component is one or more selected from $Li_{0.15}B_{0.95}(PO_4)_{0.99}F_{0.03}$, $Li_{0.15}B_{0.95}(PO_4)_{0.95}F_{0.15}$, $Li_{0.15}B_{0.95}(PO_4)_{0.9}F_{0.3}$, $Li_{0.15}B_{0.95}(PO_4)_{0.8}F_{0.6}$, $Li_{0.15}B_{0.95}(PO_4)_{0.7}F_{0.9}$ and $Li_{0.15}B_{0.95}(PO_4)_{0.5}F_{1.5}$.

5. The solid electrolyte of anyone of claims 1 to 4, wherein a thickness of the external component is 10 nm to 30 nm.

6. The solid electrolyte of anyone of claims 1 to 5, wherein a content of the external component is about 0.5 wt% to about 10 wt%, based on a total weight of the solid electrolyte.

7. The solid electrolyte of anyone of claims 1 to 6, wherein the internal component is one or more selected from $Li_{1.1}Y_{0.1}Ti_{1.9}(PO_4)_3$, $Li_{1.3}Y_{0.3}Ti_{1.7}(PO_4)_3$, $Li_{1.4}Y_{0.4}Ti_{1.6}(PO_4)_3$, $Li_{1.1}Al_{0.1}Ti_{1.9}(PO_4)_3$, $Li_{1.3}Al_{0.3}Ti_{1.7}(PO_4)_3$, $Li_{1.05}La_{0.05}Ti_{1.95}(PO_4)_3$, $Li_{1.1}Cr_{0.1}Ti_{1.9}(PO_4)_3$, $Li_{1.1}Ga_{0.1}Ti_{1.9}(PO_4)_3$ and $Li_{1.1}In_{0.1}Ti_{1.9}(PO_4)_3$.

8. The solid electrolyte of anyone of claims 1 to 7, wherein the internal component has an average particle size of about 0.5 $\mu$m to about 10 $\mu$m.

9. A method for preparing a solid electrolyte of anyone of claims 1 to 8, comprising:

   obtaining an internal component represented by a formula $Li_{1+x}M_xTi_{2-x}(PO_4)_3$, M being one or more elements selected from a group consisting of Al, La, Cr, Ga, Y, and In, and $0.05\leq x\leq0.4$;
   obtaining and dissolving a lithium source, a phosphate, a fluorine source and a boron source in water to form a raw materials solution of an external component, wherein a molar ratio of elements lithium: boron: phosphorus: fluorine in the raw materials solution of the external component is 0.15~0.165: 0.95: (1-y): (3y), and $0.01 \leq y \leq 0.5$;
obtaining a precursor material by mixing the internal component with the raw materials solution of the external component, and regulating pH value to be 8~11; and
performing a first calcination to the precursor materials to obtain the solid electrolyte,
wherein the solid electrolyte comprises the internal component and the external component coated on a surface of the internal component.

10. The method of claim 9, wherein obtaining the internal component further comprises:

mixing a titanium source, a metal M source, a lithium source and a phosphate of the internal component; and
performing a second calcination;
wherein based on molar content of elements lithium, metal M, titanium and phosphorus, a content ratio of the lithium source, the metal M source, titanium source and the phosphate of the internal component is (1~1.2)(1+x): x: (2-x): 3.

11. The method of claim 10, wherein the second calcination is performed at a temperature of about 750 °C to about 950 °C for about 4 hours to about 16 hours.

12. The method of claims 10 or 11, wherein the titanium source is $TiO_2$.

13. The method of anyone of claims 10 to 12, wherein the metal M source is one or more selected from $Al_2O_3$, $Y_2O_3$, $Ga_2O_3$, $La_2O_3$, $Cr_2O_3$ and $In_2O_3$.

14. The method of anyone of claims 10 to 13, wherein the lithium source of the internal component is one or more selected from lithium carbonate, lithium hydroxide, lithium hydroxide monohydrate, lithium nitrate and lithium acetate.

15. The method of anyone of claims 10 to 14, wherein the phosphate of the internal component is one or more selected from $NH_4H_2PO_4$, $(NH_4)_2HPO_4$, $(NH_4)_3PO_4$ and $H_3PO_4$.

16. The method of anyone of claims 9 to 15, wherein the internal component is one or more selected from $Li_{1.1}Y_{0.1}Ti_{1.9}(PO_4)_3$, $Li_{1.3}Y_{0.3}Ti_{1.7}(PO_4)_3$, $Li_{1.4}Y_{0.4}Ti_{1.6}(PO_4)_3$, $Li_{1.1}Al_{0.1}Ti_{1.9}(PO_4)_3$, $Li_{1.3}Al_{0.3}Ti_{1.7}(PO_4)_3$, $Li_{1.05}La_{0.05}Ti_{1.95}(PO_4)_3$, $Li_{1.1}Cr_{0.1}Ti_{1.9}(PO_4)_3$, $Li_{1.1}Ga_{0.1}Ti_{1.9}(PO_4)_3$ and $Li_{1.1}In_{0.1}Ti_{1.9}(PO_4)_3$.

17. The method of anyone of claims 9 to 16, wherein the internal component has an average particle size of about 0.5 $\mu$m to about 10 $\mu$m.

18. The method of anyone of claims 9 to 17, wherein the fluorine source is one or more selected from LiF, $NH_4F$ and NaF.

19. The method of anyone of claims 9 to 18, wherein the boron source is one or more selected from $H_3BO_3$, $B_2O_3$, $LiBO_2$ and triethyl borate.

20. The method of anyone of claims 9 to 19, wherein the lithium source of the external component is one or more selected from lithium carbonate, lithium hydroxide, lithium hydroxide monohydrate, lithium nitrate and lithium acetate.

21. The method of anyone of claims 9 to 20, wherein the phosphate of the external component is one or more selected from $NH_4H_2PO_4$, $(NH_4)_2HPO_4$, $(NH_4)_3PO_4$ and $H_3PO_4$.

22. The method of anyone of claims 9 to 21, wherein the first calcination comprises:

increasing the temperature of the precursor material to about 900 °C to about 1200 °C with a heating rate of about 2 °C/min to about 10 °C/min, and
keeping the precursor material at about 900 °C to about 1200 °C for about 8 hours to about 24 hours.

23. The method of anyone of claims 9 to 22, wherein the external component is selected one or more from $Li_{0.15}B_{0.95}(PO_4)_{0.99}F_{0.03}$, $Li_{0.15}B_{0.95}(PO_4)_{0.95}F_{0.15}$, $Li_{0.15}B_{0.95}(PO_4)_{0.9}F_{0.3}$, $Li_{0.15}B_{0.95}(PO_4)_{0.8}F_{0.6}$, $Li_{0.15}B_{0.95}(PO_4)_{0.7}F_{0.9}$ and $Li_{0.15}B_{0.95}(PO_4)_{0.5}F_{1.5}$.

24. The method of anyone of claims 9 to 23, wherein a content of the external component is 0.5 wt% to 10 wt%, based on a total weight of the solid electrolyte.

25. A lithium ion battery comprising:

    a cathode;
    an anode; and
    a solid electrolyte disposed between the cathode and the anode, wherein the solid electrolyte is the solid electrolyte of anyone of claims 1 to 8.

# INTERNATIONAL SEARCH REPORT

| International application No. |
| --- |
| **PCT/CN2016/077692** |

## A. CLASSIFICATION OF SUBJECT MATTER

H01M 10/0562 (2010.01) i; H01M 10/058 (2010.01) i; H01M 10/0525 (2010.01) i

According to International Patent Classification (IPC) or to both national classification and IPC

## B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

DWPI, EPODOC, CNPAT, CNKI: soild, electrolyte, core, shell, coat+

## C. DOCUMENTS CONSIDERED TO BE RELEVANT

| Category* | Citation of document, with indication, where appropriate, of the relevant passages | Relevant to claim No. |
| --- | --- | --- |
| X | CN 101114718 A (SHANGHAI INSTITUTE OF CERAMICS, CHINESE ACADEMY OF SCIENCES), 30 January 2008 (30.01.2008), description, page 3, paragraphs 2 and 3 and page 6, paragraph 6 to page 11, paragraph 8 | 1, 2, 5-8, 25 |
| A | CN 104051782 A (HUAWEI TECHNOLOGIES CO., LTD.; TSINGHUA UNIVERSITY), 17 September 2014 (17.09.2014), the whole document | 1-25 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 May 2016 (03.05.2016) | **30 May 2016 (30.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HUANG, Danping** Telephone No.: (86-10) **62411539** |

Form PCT/ISA/210 (second sheet) (July 2009)

**INTERNATIONAL SEARCH REPORT**
Information on patent family members

| International application No. |
| --- |
| **PCT/CN2016/077692** |

| Patent Documents referred in the Report | Publication Date | Patent Family | Publication Date |
| --- | --- | --- | --- |
| CN 101114718 A | 30 January 2008 | None | |
| CN 104051782 A | 17 September 2014 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510359289

- CN 101894972 A